# EUROPEAN PATENT SPECIFICATION

(11) **EP 3 520 624 B1**
(45) Date of publication and mention of the grant of the patent: **26.03.2025**
(21) Application number: 19153966.7
(22) Date of filing: 28.01.2019
(51) Int. Cl.: A23J 1/00, A23J 1/14

(54) **PROCESS FOR PRODUCING A PLANT PROTEIN INGREDIENT**
VERFAHREN ZUR HERSTELLUNG EINES PFLANZLICHEN PROTEINBESTANDTEILS
PROCÉDÉ DE PRODUCTION D'UN INGRÉDIENT DE PROTÉINE VÉGÉTALE

(30) Priority: 01.02.2018 FI 20185091
(43) Date of publication of application: 07.08.2019
(73) Proprietor: Apetit Kasviöljy Oy, 00580 Helsinki (FI)
(72) Inventor: Riihinen, Kaisu, 02770 Espoo (FI)
(74) Representative: Boco IP Oy Ab

(56) References cited:
- EP-A1- 2 783 576
- CA-A1- 2 351 903
- US-A- 3 895 003
- US-A- 3 965 086
- US-A- 4 158 656
- ROMMI K ET AL: "Effect of enzyme-aided cell wall disintegration on protein extractability from intact and dehulled rapeseed (Brassica rapa L. and Brassica napus L.) press cakes", JOURNAL OF AGRICULTURAL AND FOOD CHEMISTRY, AMERICAN CHEMICAL SOCIETY, BOOKS AND JOURNALS DIVISION, US, vol. 62, no. 32, 13 August 2014 (2014-08-13), pages 7989 - 7997, XP002743486, ISSN: 0021-8561, [retrieved on 20140731], DOI: 10.1021/JF501802E
- SARWAR GILANI G. ET AL: "Impact of Antinutritional Factors in Food Proteins on the Digestibility of Protein and the Bioavailability of Amino Acids and on Protein Quality", BRITISH JOURNAL OF NUTRITION, vol. 108, no. S2, 1 August 2012 (2012-08-01), UK, pages S315 - S332, XP093203271, ISSN: 0007-1145, DOI: 10.1017/S0007114512002371

## Description

### TECHNICAL FIELD

The present disclosure relates to a process for producing a plant protein ingredient.

### BACKGROUND

Protein ingredients, isolates and concentrates from various plant sources may be a valuable source of high-quality protein for human and animal consumption. Processes for producing such protein ingredients from complex starting materials, such as oilseed materials obtained as side streams from the processing industry, may therefore be in need.

EP 2783576 describes rapeseed kernel protein concentrate produced from rape seeds.

CA 2351903 describes a process for preparing nutritionally upgraded oilseed products.

Rommi et al., Effect of Enzyme-Aided Cell Wall Disintegration on Protein Extractability from Intact and Dehulled Rapeseed (Brassica rapa L. and Brassica napus L.) Press Cakes, Journal of Agricultural and Food Chemistry 2014, 62, 7989-7997 describes using cell-wall- and pectin-degrading enzyme preparations to enhance extractability of proteins from rapeseed press cake.

US 4158656 discloses a process for producing a detoxified protein concentrate product from defatted oilseeds.

US 3965086 describes a process for concentrating oilseed protein.

US 3895003 discloses a process for producing a protein concentrate.

### SUMMARY

A process for producing a plant protein concentrate is disclosed. The process comprises comminuting the plant material into particles, thereby obtaining comminuted plant material; separating the particles of the comminuted plant material into a finer fraction and a coarser fraction; washing the finer fraction with an aqueous alcohol solution for reducing the solubility of proteins contained in the finer fraction, thereby obtaining a washed finer fraction; enzymatically treating the washed finer fraction to remove at least a part of the phytate and/or cell wall components to obtain an enzymatically treated finer fraction, and optionally removing at least a part of water soluble components from the enzymatically treated finer fraction, thereby obtaining the plant protein ingredient; and drying the plant protein ingredient to a moisture content of at most 45 % (w/w ). The plant material comprises at least one of an oilseed material, such as rapeseed material, canola seed material, turnip rapeseed material, sunflower seed material, or lupine seed material; broad bean material; or pea material.

### BRIEF DESCRIPTION OF THE DRAWINGS

The accompanying drawings, which are included to provide a further understanding of the embodiments and constitute a part of this specification, illustrate various embodiments. In the drawings:
Fig. 1 illustrates a process for producing a plant protein ingredient; and
Figs. 2A and 2B show the effect of hydrothermal and steam explosion treatments on protein water solubility of the plant protein ingredient, measured as protein dispersibility index (PDI).

### DETAILED DESCRIPTION

A process for producing a plant protein ingredient is disclosed. The process comprises comminuting the plant material into particles, thereby obtaining comminuted plant material; separating the particles of the comminuted plant material into a finer fraction and a coarser fraction; washing the finer fraction with an aqueous alcohol solution for removing at least a portion of undesired components contained in the finer fraction and optionally for removing at least a portion of undesired components contained in the finer fraction, thereby obtaining a washed finer fraction; and enzymatically treating the washed finer fraction to remove at least a part of the phytate and/or cell wall components to obtain an enzymatically treated finer fraction and optionally removing at least a part of water soluble components from the enzymatically treated finer fraction, thereby obtaining the plant protein ingredient.

The process may further comprise drying the plant protein ingredient to a moisture content of at most 45 % (w/w).

With the process, it is possible to obtain a plant protein ingredient having a relatively high protein content, suitable for use in food or feed applications. The protein may be present in the ingredient in a form that is adequately or at least partially soluble. The protein may also be in a form that is relatively well absorbed by humans and/or animals.

The process may be suitable for various plant materials as the starting material, including materials that may be typically complex to process and which may contain significant quantities of antinutritional components. Examples of such materials may include rapeseed, canola, turnip rapeseed material or press cakes obtainable from deoiling them. The amount of antinutritional components, for example glucosinolates and/or phytate, and of insoluble cell wall components may be reduced by the process.

The term "plant protein ingredient" may be understood as referring to a vegetable protein product intended for use in food and/or feed. The plant protein ingredient may have a protein content of at least 35 w-% by total dry weight of the plant protein ingredient. In an embodiment, the plant protein ingredient is a vegetable protein product as defined by the Codex Alimentarius. The vegetable protein product as defined by the Codex Alimentarius may have a protein content of at least 40 w-% by total dry weight of the plant protein ingredient.

Various different plant materials and materials obtainable from various different plant species, or any combinations or mixtures thereof, may be used as the starting material in the process. For example, various oilseed materials may be well suited for the process. Examples of oilseed material include canola seed material, turnip rapeseed material, sunflower seed material, and/or lupine seed material. Other suitable materials may include e.g. broad bean (also known as fava bean, i.e. beans of *Vicia faba*), pea (seed or seed pod of *Pisum sativum*) or any mixtures or combinations thereof. The term "rapeseed" may, in the context of this specification, be understood as referring to plants of *Brassica napus* subsp. *oleifera.* The term "canola" may be understood as referring to plants of a cultivar of rapeseed, i.e. *Brassica napus* subsp. *oleifera.* The term "turnip rapeseed" may be understood as referring to plants of *Brassica rapa* subsp. *oleifera.*

The plant material may comprise or be plant seed material, for example seeds of any one of the plants described in this specification, such as oilseed material.

The plant material may comprise or be a material obtainable from deoiling of an oilseed material.

The plant material may comprise or be a press cake obtainable from mechanical deoiling of an oilseed material. The mechanical deoiling may comprise cold pressing or warm pressing, i.e. hot pressing, the plant material. The plant material may be conditioned before the mechanical deoiling, e.g. pressing, for example optionally by moistening and by heating the plant material to a suitable temperature, e.g. a temperature of about 90 to 100°C. For example, the plant material may comprise or be a press cake obtainable from warm pressing of an oilseed material, such as rapeseed or turnip rapeseed. The pressing may be done using, for example, a screw press or other suitable type of press. Pressed, in particular warm pressed, oilseed material, such as rapeseed or turnip rapeseed material, may be very well suited for the process. The rapeseed or turnip rapeseed material may contain hulls, but alternatively it may be at least partially dehulled.

After the deoiling, the plant material, such as a press cake obtainable from oilseed material, e.g. rapeseed or turnip rapeseed material, may still contain a significant amount of the oil present in the plant material before deoiling. For example, a press cake obtainable from rapeseed or turnip rapeseed material after deoiling, such as warm pressing, may still comprise about 20 % (w/w) of oil. This may depend on how the deoiling is done. For example, oilseed material obtainable from solvent extraction may contain a smaller proportion of oil. The oil may be encapsulated in the plant material, such that most or some of it may still remain in the material during the subsequent process steps and even in the final plant protein ingredient obtained.

In other embodiments, the plant material may be obtainable from solvent extraction, e.g. of an oilseed material. The plant material may also be obtainable from a combination of mechanical deoiling and solvent extraction. The plant material may be flaked prior to the deoiling, for example prior to the mechanical deoiling or solvent extraction.

In an embodiment, the plant material comprises or is at least one of an oilseed material, such as rapeseed material, canola seed material, turnip rapeseed material, sunflower seed material, or lupine seed material; broad bean material; or pea material.

In an embodiment, the plant material comprises or is a plant material selected from the group consisting of rapeseed material, canola seed material, turnip rapeseed material, sunflower seed material, lupine seed material, broad bean material, pea material, and any combination or mixture thereof.

In an embodiment, the plant material comprises or is at least one of rapeseed material, canola seed material, turnip rapeseed material, sunflower seed material, or lupine seed material.

In an embodiment, the plant material comprises or is a plant material selected from the group consisting of rapeseed material, canola seed material, turnip rapeseed material, sunflower seed material, lupine seed material, and any combination or mixture thereof.

The plant material, for example the press cake, may be comminuted by at least one of grinding, milling, crushing, or cutting. For example, a pin mill or other suitable mill, or any other suitable grinding, crushing or cutting apparatus may be used. The comminuting into the particles increases the surface area of the plant material, thereby rendering it more accessible for the subsequent treatment steps. The particle size or particle size distribution to which the plant material may be comminuted is not particularly limited, but it may be desirable to comminute it to particles as small as practically feasible to obtain a relatively soft comminuted plant material. For example, the particles may have an average particle diameter of at most 0.8 mm, or at most 0.7 mm, or at most 0.6 mm.

The particles of the comminuted plant material may be separated into the finer fraction and the coarser fraction by any suitable means, for example by dry fractionating. E.g. at least one of a sieve, a screen, a separator, or a classifier may be used for the separating. For example, the particles may be separated into the finer fraction and the coarser fraction by dry sieving, for example using a vibrating sieve or a cloth sieve. However, other separation methods may also be contemplated.

The terms "coarser" and "finer" in the context of the fractions described in this specification, such as "coarser fraction" and "finer fraction", may be understood such that the fractions are coarser or finer relative to each other, i.e. that the finer fraction is finer than the coarser fraction. The fractions typically have particle size distributions that may be different from each other. The particle size distributions of the coarser fraction and the finer fraction may overlap at least to some extent. Various factors, including e.g. the method and parameters of the comminuting or of the separation, may have an effect on the exact particle size distributions. The means for separating the fractions may also be selected depending e.g. on the plant material, its composition, the desired protein content of the plant protein ingredient to be produced, and/or other factors.

The terms "finer fraction" and "coarser fraction" should not be understood that only two fractions are necessarily obtained. Instead, the comminuted plant material may be separated into at least two fractions, at least one of which may be the finer fraction. In other words, the comminuted plant material may be separated into at least one finer fraction and at least one coarser fraction.

The coarser fraction may comprise, for example, uncomminuted parts or parts of straw, which have been contained in the plant material. The finer fraction may have a higher protein content and/or lower content of acid detergent fiber than the original plant material and the coarser fraction.

Particle diameters and their distributions may be measured based on laser diffraction, for instance using a Beckman Coulter LS particle analyzer. An example of a suitable particle analyzer is the Beckman Coulter LS 230 particle distribution analyzer. In laser diffraction, a group of particles is illuminated with monochromic light. The particles cause scattering of light. The nature of the scattering may depend on the size and refractive index of the particles. The particle size distribution may be calculated based on the measured scatter pattern detected. The measurement may be performed essentially according to the analyzer manufacturer's instructions.

Another method for measuring particle diameters and their distributions is using three or more cloth sieves of particular aperture sizes. The particles may be sieved using the cloth sieves, and the proportion of the particles separated by each cloth sieve is determined e.g. by weighing the particles separated by each cloth sieve. The particle size distribution and other parameters may then be calculated from the proportions of the particles separated by each cloth sieve.

The term "average particle diameter" may be understood as referring to the mean value of all particle diameters in the sample. The term "average particle diameter" may, in the context of this specification, refer to volume average particle diameter. It may, alternatively or additionally, refer to the volume mean particle diameter. In an embodiment, the term "average particle diameter" refers to number average diameter.

The term "median particle diameter" may refer to the midpoint of particle diameters when all particle diameters in the sample are arranged in the order of value, i.e. there are equally many higher and lower values. The term "median particle diameter" or "D50" may, in the context of this specification, refer to volume median particle diameter.

The maximum particle diameter of the particles contained in the finer fraction may be, for example, at most 0.7 mm, or at most 0.65 mm, or at most 0.6 mm. The separation of the particles may however always not be perfect. Thus, in an embodiment, at least 95 %, or at least 97 %, or at least 99 %, of the particles contained in the finer fraction have a diameter at most 0.7 mm, or at most 0.65 mm, or at most 0.6 mm.

The median particle diameter of the particles contained in the finer fraction may be, for example, at most 0.6 mm, or at most 0.55 mm, or at most 0.5 mm.

The particles may be separated into the finer fraction and the coarser fraction using suitable means to this end, for example using a 0.7 mm or a 0.6 mm sieve. The separation may thus be done such that the coarser fraction contains particles greater than 0.7 mm or greater than 0.6 mm and the finer fraction contains particles smaller than 0.7 mm or smaller than 0.6 mm. This kind of separation into the fractions may be well suited for oilseed material, such as rapeseed and/or turnip rapeseed material, in particular.

The washing with the aqueous alcohol solution may affect the solubility of proteins contained in the finer fraction. Therefore the washing may be suitable for reducing the solubility of at least a part of the proteins contained by the finer fraction. Not to be bound by theory, at least a part of the proteins, i.e. at least a part of the total protein, may be denatured, such that the solubility of the proteins contained in the washed finer fraction is reduced. The reduced solubility may have various effects. For example, unsoluble proteins may reduce foam **and** emulsion formation during subsequent process steps. However, the washing with the aqueous alcohol solution may also improve the processability of the washed finer fraction during subsequent process steps. For example, the washing with the aqueous alcohol solution may reduce the hydrophilicity of protein surface structures and enable the enzymatic treatment without an undesired or significant loss of soluble proteins. The enzymatic treatment of the washed finer fraction may thus be more efficient, and the loss of soluble proteins may be reduced or minimized.

The aqueous alcohol solution may comprise about 55 to 85 % (w/w) of the alcohol. An aqueous alcohol solution comprising about 70 to 75 % (w/w) may be particularly well suited. The alcohol may comprise or be at least one of ethanol, isopropanol, isobutanol, or any mixture or combination thereof. Ethanol is well suited and typically allowed by regulations concerning food production. The aqueous alcohol solution may further comprise other components or additives, for example one or more salts.

In an embodiment, the alcohol is selected from the group consisting of ethanol, isopropanol, isobutanol, and any mixtures or combinations thereof.

The washing may be done e.g. by bringing the aqueous alcohol solution in contact with the finer fraction, for example by mixing. The undesired components and possibly also other components that are soluble in the aqueous alcohol solution are at least partially solubilized therein and are thereofore at least partially extracted. After the washing, the aqueous alcohol solution containing the components extracted, i.e. removed form the finer fraction, i.e. the aqueous alcohol extract solution, may be separated from the washed finer fraction. The washing with the aqueous alcohol solution may be performed e.g. at a temperature of e.g. at least 50°C, or at 50 - 60 °C. The washing may be performed e.g. for at least 20 minutes, or 20 - 40 minutes.

The finer fraction may be washed additionally for removing at least a portion of undesired components contained in the finer fraction.

The undesired components contained in the finer fraction may include components adversely affecting the taste, protein content and/or nutritional value of the plant protein ingredient.

The washing with the aqueous alcohol solution may remove, depending e.g. on the plant material used, at least a portion of the sugars, glucosinolates, sinapine and/or tannins contained in the finer fraction.

For example, rapeseed or turnip rapeseed typically contain sinapine and possibly other phenolic compounds, the removal or reduction of which may improve the taste of the plant protein ingredient. Broad bean and/or pea may contain other phenolic compounds, such as chlorogenic acid.

Glucosinolates may affect the taste of the plant protein ingredient, but certain decomposition products of glucosinolates may, additionally or alternatively, have toxic effects and may render the plant protein ingredient unsuitable for consumption as food or feed. A rapeseed press cake obtained from warm pressing may contain glucosinolates e.g. about 7-12 mmol/kg. Even though glucosinolates are ingested in a common diet moderate amounts and they may have certain beneficial health effects, their detrimental effects have also been characterized. Goitrin and isothiocyanates formed in the myrosinase mediated hydrolysis of its constituents may have potentially goitrogenic effects. The process may therefore reduce the content of glucosinolates to an amount below 0.2 mmol/kg by dry weight of a rapeseed and/or turnip rapeseed plant protein ingredient.

Tannins may have an undesirable taste and/or be antinutritional. Removal of sugars, for example monosaccharides and/or oligosaccharides, such as glucose, fructose and/or saccharose, or other FODMAPs (short chain carbohydrates that may be poorly absorbed in the small intestine of subjects consuming the plant protein ingredient), may increase the protein content of the plant protein ingredient. A plant protein ingredient with a reduced FODMAP content may also be obtained. The process may, for example, reduce the content of sugars to an amount below 1 g/100 g, or below 0.5 g/100 g, by dry weight of the plant protein ingredient.

In an embodiment, the undesired components contained in the finer fraction include at least one of sugars, glucosinolates, phenolic compounds, such as sinapine and/or chlorogenic acid, or tannins. These undesired components may be present in oilseed materials, such as rapeseed, canola or turnip rapeseed, but also in other plant materials described in this specification.

The washing with the aqueous alcohol solution may also improve the microbiological quality of the plant protein ingredient.

At least some of the oil contained in the finer fraction before the washing may be removed by the washing. However, in many embodiments, it is not necessary or desired to extract and remove a significant amount or any of the oil. If the aqueous alcohol extract solution is to be further used or otherwise treated, it may not be desirable for it to contain significant amounts of the oil.

In an embodiment, at most 10 % of the oil contained in the finer fraction, i.e. of the oil contained in the finer fraction prior to the washing, is removed from the finer fraction during the washing with the aqueous alcohol solution. The amount of the oil removed may be determined, for example, from the aqueous alcohol extract solution containing the extracted undesired components and any removed oil.

In an embodiment, the relative oil content of the plant protein ingredient after the washing is at most 10 % less, or at most 5 % less, or at most 1 % less than the oil content of the finer fraction prior to the washing.

The oil content may also be measured by measuring the lipid content; they may be essentially the same or at least similar, as both may include the content of triacylglycerols and phospholipids.

Phytate is an antinutritional compound, which may complex metals and impact the availability of minerals. Reducing the amount of the phytate in the finer fraction and subsequently in the plant protein ingredient may therefore be desirable.

Various enzymes may be used and be commercially available for enzymatically treating the washed finer fraction to remove at least a part of the phytate and/or cell wall components to obtain an enzymatically treated finer fraction. Suitable enzymes may include, for example, one or more of a phytase or a cell wall degrading enzyme, or any mixtures or combinations thereof. The enzymes may be food grade enzymes. Various classes of phytases may be used. Phytases may be phosphatases capable of hydrolysing phytic acid and/or phytates, thereby releasing inorganic phosphorus. Examples of cell wall degrading enzymes may include e.g. carbohydrases, such as cellulases, arabanases, β-glucanases, hemicellulases, xylanases, or any mixtures or combinations thereof. Cell wall degrading enzymes may hydrolyse one or more plant cell wall components into water soluble components.

The washed finer fraction may be enzymatically treated by bringing it in contact with one or more enzymes, for example in water or in an aqueous solution. The one or more enzymes may be mixed with the washed finer fraction and water or other aqueous solution. The aqueous solution may comprise, for example, a buffer and/or one or more salts.

The washed finer fraction may be enzymatically treated at a suitable pH. The pH may depend, for example, on the optimal pH for the functioning of the one or more enzymes. In an embodiment, the pH may be adjusted such that the solubility of the proteins contained in the washed finer fraction is minimized. Such a pH may be a pH at or close to the isoelectric point of the proteins contained in the washed finer fraction. A suitable pH for the enzymatic treatment may be, for example, a pH of about 4 to 4.5, e.g. a pH of 4.2. An example of a suitable aqueous buffer is citrate buffer, but various other buffers, including buffers suitable for food or feed use, may be contemplated. The pH may, additionally or alternatively, be adjusted for the enzymatic treatment by adding an acid to the washed finer fraction. The acid may be, for example, hydrochloric acid or citric acid, but other acids suitable for use in the manufacture of foodstuffs may also be contemplated. The pH may be adjusted back to neutral or near neutral pH after the enzymatic treatment by adding a suitable agent, for example an alkaline agent, such as NaOH. The neutralization may also be omitted, for example if wishing to avoid an increase in the salt content.

Other conditions for the enzymatic treatment may be selected, for example, on the basis of the optimal temperature for the functioning of the one or more enzymes.

The plant protein ingredient may comprise at most 3 w-%, or at most 1.5 w-%, or 0.7-1.5 w-% of phytate based on the total wet weight of the plant protein ingredient. The total wet weight of the plant protein ingredient may be understood as the weight of the plant protein ingredient that has not been dried. Such wet plant protein ingredient may have, for example, a moisture content of about 3-6 w-%, but it may also have a lower or higher moisture content depending e.g. on the conditions of the process for its preparation.

After the enzymatic treatment, the enzymatically treated finer fraction may be at least partially dewatered. In other words, the water or aqueous solution containing at least a part of the one or more enzymes may be removed from the enzymatically treated, washed finer fraction, i.e. the plant protein ingredient thereby obtainable. The dewatering may be done e.g. by filtering, but other suitable dewatering methods may also be contemplated. At least a part of water soluble components may thereby be removed from the enzymatically treated finer fraction. These water soluble components may include products of the enzymatic treatment, i.e. enzymatic hydrolysis, for example, sugars, mono- and/or oligosaccharides, phosphoric acid residue and/or phosphoric acid.

The plant protein ingredient thereby obtained may be dried to a moisture content of at most 45 % (w/w). It may also be dried to a lower moisture content, for example at most 30 % (w/w), or at most 20 % (w/w), or at most 10 % (w/w), or at most 5 % (w/w). The drying may improve the preservability or shelf life, and the dried plant protein ingredient may be easier to store and handle.

The plant protein ingredient may be suitable for use after the drying. However, in many embodiments, it may be treated further to improve its properties.

The plant protein ingredient obtainable after the washing and the enzymatic treatment may be subsequently treated to improve the solubility of the proteins contained therein. For example, the plant protein ingredient may be hydrothermally treated, thereby improving the solubility of the proteins contained therein. Again, not to be bound by theory, the treatment may at least partially assist in reforming the three-dimensional structure of the proteins, so that their solubility improves. The plant protein ingredient may be hydrothermally treated before or after the drying.

The plant protein ingredient may be hydrothermally treated at a temperature of at least 130°C, thereby improving the solubility of the proteins contained therein.

The plant protein ingredient may be hydrothermally treated by at least one of dry extrusion or steam explosion treatment.

The term "hydrothermal treatment" may refer to a process comprising treating the plant protein ingredient at a temperature of at least 130°C in the presence of water or steam. The hydrothermal treatment may be performed under pressure.

The term "dry extrusion" may refer to extrusion which does not require adding water or steam to the extruder in which the extrusion of the plant protein ingredient takes place, i.e. water or steam in addition to any water or steam the plant protein ingredient as such may contain. In dry extrusion, heat may be generated by the extrusion process itself. The mechanical interactions, or the friction caused by them, inside the extruder may generate the heat and optionally pressure required. When the plant protein ingredient leaves the extruder, it may expand.

The term "steam explosion" may refer to a process comprising treating the plant protein ingredient at a temperature of at least 130°C under pressure in the presence of steam and releasing the pressure. The pressure may be released suddenly or explosively. The pressure may be released e.g. by forcing the plant protein ingredient thus treated through a discharge gate. The pressure behind the discharge gate is lower than the pressure during the treatment at the temperature of at least 130°C in the presence of steam.

The plant protein ingredient may be hydrothermally treated, e.g. by dry extrusion or steam explosion treatment, at a temperature of at least 130°C, or at least 140°C, or at about 130 - 210°C, or at about 140 - 180°C. The plant protein ingredient may be hydrothermally treated, e.g. by dry extrusion or steam explosion treatment, at a pressure of at least 2 bar, or at about 2 to about 10 bar. The temperature and the pressure may be selected depending on the conditions, for example such that the water is present as steam in the treatment. The the plant protein ingredient may be hydrothermally treated for at least 1 minute, or at least 2 minutes, or at least 3 minutes, or at least 5 minutes, or at least 10 minutes, or at least 15 minutes, or at least 20 minutes. A suitable time period may be selected depending e.g. on the original plant material, the hydrothermal treatment, and/or the desired protein solubility.

The protein content of the plant protein ingredient obtainable may be at least 35 w-%, or at least 40 w-% based on the total dry weight of the plant protein ingredient. In an embodiment, the protein content may be about 35 to 45 w-% based on the total dry weight of the plant protein ingredient. The carbohydrate content of the plant protein ingredient obtainable may be, for example, 30 to 45 w-%, or 30 to 43 w-%, or 30 to 40 w-% based on the total dry weight of the plant protein ingredient. The carbohydrate content may include fibre, mainly insoluble fibre. The oil content of the plant protein ingredient obtainable may be, for example, 15 to 25 w-% based on the total dry weight of the plant protein ingredient. The plant protein ingredient may optionally further comprise other components, for example ash, moisture, minerals, vitamins, sterols, crude fibre, salts, herbs, spices, and/or one or more food additives, such that all the components amount to 100 w-%.

The plant protein ingredient may have a protein dispersibility index (PDI) of at least 5 %, or at least 10 %, or at least 11 %. The PDI may be increased e.g. by subsequently treating it to improve the solubility of the proteins contained therein, for example by a hydrothermal treatment according to one or more embodiments described in this specification. The hydrothermal treatment may increase the PDI of the plant protein ingredient by at least 50 % as compared to a plant protein ingredient produced by the same process but without the subsequent treatment, such as the hydrothermal treatment. The PDI may be measured using the AOAC standard method (AOCS. 2011e. Protein Dispersibility Index (PDI). Official Method Ba 10-65. Official Methods and Recommended Practices of the AOCS, AOCS, 6th ed., Second Printing, Urbana, IL).

The plant protein ingredient may, in some embodiments, be subjected to a texturisation process, such that it is textured or structured.

A plant protein ingredient is also disclosed.

A plant protein ingredient obtainable by one or more embodiments of the process is also disclosed.

The composition of the plant protein ingredient may depend, to some extent, on the plant material used as the starting material for its production. The plant protein ingredient may be obtainable from any plant material described in this specification. The plant protein ingredient may thus be a rapeseed protein ingredient; a turnip rapeseed protein ingredient; a canola protein ingredient; a sunflower protein ingredient; a lupine protein ingredient; a broad bean protein ingredient; a pea protein ingredient; or any mixture or combination thereof.

The plant protein ingredient may have a protein content of at least 35 w-% based on the total dry weight of the plant protein ingredient. In an embodiment, the protein content may be about 35 to 45 w-% based on the total dry weight of the plant protein ingredient, for example when the plant protein ingredient is a rapeseed and/or turnip rapeseed protein ingredient. It may have a carbohydrate content of 30 to 45 w-%, or 30 to 43 w-%, or 30 to 40 w-% based on the total dry weight of the plant protein ingredient. It may have an oil content of 15 to 25 w-% based on the total dry weight of the plant protein ingredient. The plant protein ingredient may optionally further comprise other components, for example ash, moisture, minerals, vitamins, sterols, crude fibre, salts, herbs, spices, and/or one or more food additives, such that all the components amount to 100 w-%.

The plant protein ingredient may have a protein dispersibility index (PDI) of at least 5 %, or at least 10 %, or at least 11 %.

In an embodiment, the plant protein ingredient is obtainable from a plant material which comprises or is at least one of an oilseed material, such as rapeseed material, canola seed material, turnip rapeseed material, sunflower seed material, or lupine seed material; broad bean material; or pea material.

In an embodiment, the plant protein ingredient is obtainable from a plant material which comprises or is at least one of rapeseed material, canola seed material, turnip rapeseed material, sunflower seed material, or lupine seed material.

In an embodiment, the plant material comprises or is a plant material selected from the group consisting of rapeseed material, canola seed material, turnip rapeseed material, sunflower seed material, lupine seed material, broad bean material, pea material, and any combination or mixture thereof.

In an embodiment, the plant material comprises or is a plant material selected from the group consisting of rapeseed material, canola seed material, turnip rapeseed material, sunflower seed material, lupine seed material, and any combination or mixture thereof.

The plant protein ingredient may comprise at most 0.2 mmol/kg of glucosinolates, in particular in embodiments in which the plant protein ingredient is a rapeseed and/or turnip rapeseed plant protein ingredient.

The plant protein ingredient may comprise at most 1 g/100 g, or at most 0.5 g/100 g, sugars by dry weight of the plant protein ingredient.

The plant protein ingredient comprises at most 1.5 w-%, or it may comprise 0.7-1.5 w-% of phytate based on the total wet weight of the plant protein ingredient.

The plant protein ingredient may be essentially tasteless or have a mild taste. It may therefore be suitable for use in food or feed applications. The protein may be present in the ingredient in a form that is well soluble. The protein may also be in a form that is relatively well absorbed. The plant protein ingredient may, in some embodiments, be textured or structured.

A food or feed product comprising or produced using the plant protein ingredient according to one or more embodiments is also disclosed.

The food or feed product may be, for example, a bakery product, a snack product, a snack bar, a cereal, a breakfast cereal, porridge, instant porridge, a meat analogue, a dairy alternative, a pasta, a flour a feed, or a feedstuff. Bakery products may include e.g. various types of bread, rolls, buns, cakes, pies, other sweet bakery products, cookies, biscuits, muffins, doughnuts, and so on.

### EXAMPLES

Reference will now be made in detail to various embodiments, an example of which is illustrated in the accompanying drawing.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

For reasons of simplicity, item numbers will be maintained in the following exemplary embodiments in the case of repeating components.

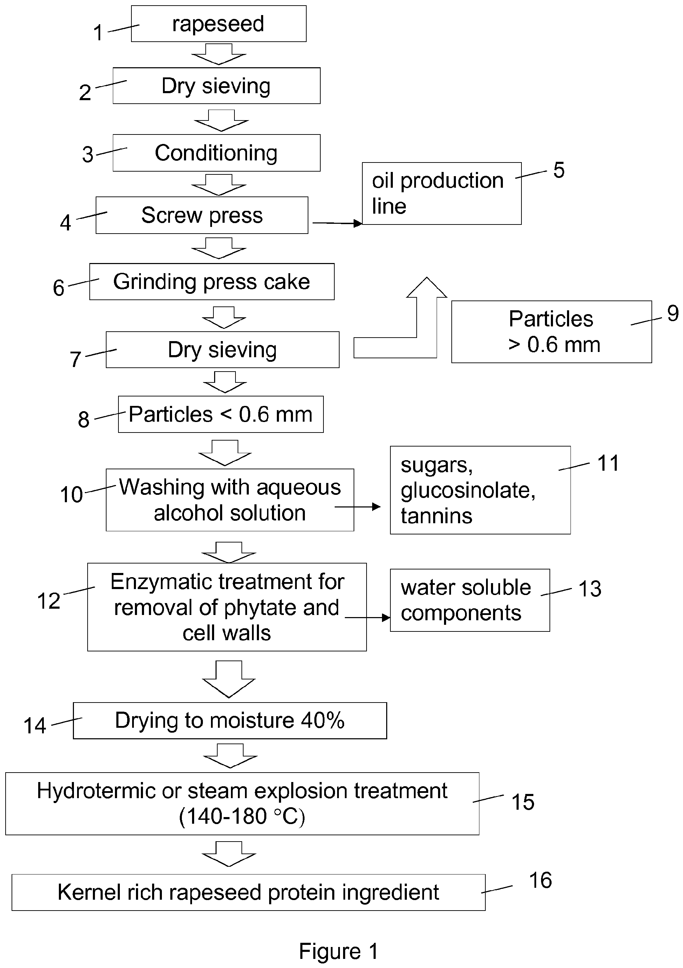

Fig. 1 illustrates an exemplary embodiment of a process for producing a plant protein ingredient. As a skilled person will understand, various steps and phases in this exemplary embodiment may be combined with other embodiments of the process described in this specification. In this embodiment, the starting material at 1 is rapeseed seeds, but it could alternatively be turnip rapeseed seeds, a mixture thereof, any other oilseed material, or any other plant material described in this specification. For example, other oilseed plant materials could also be processed in a similar manner. The plant material, i.e. whole rapeseed seeds, are dry sieved at 2 and conditioned at 3 prior to mechanical deoiling. The conditioning at 3 may include warming the dry sieved rapeseed e.g. to a temperature of temperature of 90-100 °C. The conditioning may also include moistening the dry sieved rapeseed, but this is optional. The mechanical deoiling is, in this embodiment, done by warm pressing. At 4, the conditioned plant material obtainable from 3 is warm pressed by screw pressing in a rotating screw shaft in a cylindrical barrel. The conditioned plant material may be further heated and pressurized within the barrel by the rotating screw shaft working against a choke at the end of the barrel.

The oil obtainable by the pressing at 4 may be further directed to an oil production line at 5. The press cake, also obtainable by the pressing at 4, may thus be a side stream in an oil production line which includes the above steps of deoiling. However, the process is not limited to rapeseed or other oilseed materials. Instead of a press cake obtainable from deoiling, any other plant material described in this specification, for example sunflower seed material, could be used as the plant material for the subsequent steps of the process. The press cake obtained from the pressing at 4 may still contain, for example, about 20 % of oil. The oil may be encapsulated in the press cake and therefore remain in the material at least partially in the subsequent steps of the process.

The press cake obtainable from the deoiling at 4 may then be ground at 6 or otherwise comminuted into particles, for example using a pin mill or any other type of apparatus suitable for the comminuting. A suitable median particle size obtainable by the grinding may be, for example, in the range of 0.6 to 0.7 mm or smaller, but the particle size may depend on various factors, e.g. on the plant material used, on the comminuting method or apparatus used, on the subsequent fractioning, and/or the desired protein content of the eventual plant protein ingredient.

At 7, the ground press cake is separated into a coarser fraction 9 and into a finer fraction 8, in this example by dry sieving. The particle sizes and distributions of the fractions may again depend on various factors, including the factors above and e.g. on the separation method used. In this exemplary embodiment, the separation is done such that the coarser fraction 9 contains particles greater than 0.6 mm (for example, at least 95 % of the particles being greater than 0.6 mm) and the finer fraction 8 contains particles smaller than 0.6 mm (for example, at least 95 % of the particles being smaller than 0.6 mm). This can be achieved e.g. by using 0.6 mm sieve or any other suitable separation method described in this specification. The coarser fraction may be circulated back into the oil production line 5, for example to be deoiled, or ground again at 6, or it may be otherwise treated, discarded or used e.g. as a feed. The finer fraction 8 may contain, for example, about 30 to 50 % of the ground press cake.

The finer fraction 8 is treated further by washing with an aqueous alcohol solution at 10, for example an aqueous solution containing about 70 to 75 w-% ethanol. The aqueous alcohol solution can extract undesired components 11, such as sugars, glucosinolates and tannins, from the finer fraction. The washing may remove at least a part of the oil contained in the finer fraction 8, but it may not be necessary or desired. The undesired components 11 together with the aqueous alcohol solution may be discarded or treated further.

The washed finer fraction obtainable from the washing at 10 may be further treated by an enzymatic treatment at 12. The enzymatic treatment may include mixing the washed finer fraction with one or more enzymes in an aqueous solution. The one or more enzymes may include one or more enzymes capable of hydrolysing phytic acid and/or phytates, and/or one or more enzymes capable of degrading cell wall material in the washed finer fraction. Depending on the starting plant material, additional or alternative enzymes may also be contemplated. The pH of the washed finer fraction may be adjusted to a suitable value, for example any value described in this specification. After the enzymatic treatment, water soluble components 13, i.e. the water phase, may be separated from the enzymatically treated finer fraction. The water phase may contain at least a part of the enzymes and the water soluble components 13 that are solubilized in the water phase. The water soluble components 13 may be recovered, treated further or discarded. The separation may be done using any suitable apparatus, for example a filter or a centrifugal separator.

The enzymatically treated finer fraction may be dried at 14, for example to 40 % moisture. The plant protein ingredient thereby obtainable may be usable as such. However, it may also be treated further. In this exemplary embodiment, the dried plant protein ingredient is treated at 15 by a hydrothermic or a steam explosion treatment e.g. at a temperature of about 140 to 180 °C to improve the solubility of the total protein contained in the dried plant protein ingredient. After the hydrothermic or steam explosion treatment at 15 the plant protein ingredient obtained may be further dried to a desired moisture content, for example at most 10 % or at most 5 % moisture. The resulting rapeseed protein ingredient at 16 may contain about 35 to 45 w-% of protein by the total dry weight of the rapeseed protein ingredient.

### EXAMPLE 1 - FINDING A PRESS CAKE AS A RAW MATERIAL FOR THE RAPESEED INGREDIENT

A partially warm pressed rapeseed press cake was tested as a material for the process for producing a rapeseed ingredient. The rapeseed press cake was obtained from an existing industrial rapeseed oil production process. The whole rapeseeds were conditioned at a temperature of 90-100 °C prior to screw pressing in a rotating screw shaft in a cylindrical barrel. The rapeseed material was further heated and pressurized within the barrel by the rotating screw shaft working against a choke at the end of the barrel.

The water content was low (< 5%) in the dried rapeseed raw material in the course of the screw pressing. The dry protein material (< 0.35 g/water/g protein) is stable to thermal denaturation.

The proteins in the press cake were found water soluble (60-70%) in the alkali (pH 11-12) conditions optimal for their extraction. This indicates that rapeseed proteins were neither thermal nor pressure denatured under the conditions of warm pressing. The residual oil content of material remained at 15-25 %. Rapeseed press cake was found as an excellent material for the manufacture of rapeseed ingredient rich in protein, fiber and encapsulated oil. Rapeseed press cake contains carbohydrates (35-45 %), of which a major part is insoluble fiber.

### EXAMPLE 2 - GRINDING AND REDUCTION OF THE CONTENT OF FIBER BY DRY FRACTIONATION

Grinding of the rapeseed press cake for the reduction of carbohydrates was tested, and the increase of protein content by a dry sieve fractionating was observed at laboratory and at pilot scale.

A batch of rapeseed expeller cake (50-60 kg) was grinded in a disintegrator DESI-15/16K pin mill. The pin discs were driven and rotated to opposite directions with a speed optimal for grinding the cake to a homogenous grinded rapeseed material. The rapeseed cake contained 15-25% residual encapsulated oil. Since the oil did not hinder the grinding, it was deduced to be encapsulated inside the endosperm of seed material under the screw pressing process. The grinding was possible in a certain type of pin mill (Contraplex and DESI-15/16K).

A sample of material (100-150 g) was dry sieved in a laboratory scale sieve (Rüetschi +Co Ag, sieving time 10 minutes). The content of protein increased 1 portion-% and content of carbohydrates reduced 2 portion-% in the dry fractionation of the grinded starting material to particles below the sieve size 475 µm, i.e. the finer fraction. The respective change of acid detergent fibre was from 17% to 15%, respectively (Table 1).

**Table 1. Portions of protein, lipid, ash and carbohydrate in the starting material and the dry fractionated rapeseed press cake at laboratory scale.**

| | Starting material | Composition of sieved material (g/100 g DW) | | | |
|---|---|---|---|---|---|
| | grinded material | particles <475 µm | particles 475-633 µm | particles 633-750 µm | particles >750 µm |
| Protein | **30.7** | 31.6 | 31.2 | 31.1 | 29.6 |
| Lipid | **20.7** | 22.0 | 19.8 | 20.8 | 17.9 |
| Ash | **6.9** | 6.8 | 6.9 | 6.9 | 6.4 |
| Carbohydrates | **41.7** | 39.6 | 42.2 | 41.2 | 46.1 |

The grinded material was sieved at the pilot scale devices through both a cloth sieve and a metal sieves. Sieving (< 0.6 mm) reduced the content of carbohydrates. The portion of the fine particles, i.e. finer fraction (<0.6 mm), varied 40-50% and the coarse particles (coarser fraction) 50-50% depending on the grinding level of the material (Tables 2 and 3).

**Table 2. Portions of protein, lipid, ash and carbohydrate in the starting material and the dry fractionated rapeseed press cake at pilot scale (Vibro Sifter MIAG, a cloth sieve)**

| | Starting material | Composition of sieved material (g/100 g DW) | |
|---|---|---|---|
| | grinded material | particles <600 µm | particles >600 µm |
| Protein | 30.8 | 33.4 | 31.8 |
| Lipid | 20.8 | 24 | 21.2 |
| Ash | 6 | 6.6 | 6.6 |
| Carbohydrates | 42.3 | 36 | 40.5 |
| ADF-fibre | 19.9 | 14.9 | 21.6 |

**Table 3. Portions of protein, lipid, ash and carbohydrate in the starting material and the dry fractionated rapeseed press cake at pilot scale (Vibrating sieve machine, a metal sieve, K60-888)**

| Kapotek (K60-888) | Starting material | Sieved material in dry fractions | |
|---|---|---|---|
| | grinded material | particles < 600 µm | particles > 600 µm |
| Protein | 30.8 | 31.6 | 29.1 |
| Lipid | 20.8 | 23.2 | 20.9 |
| Ash | 6 | 6.7 | 6.2 |
| Carbohydrates | 42.3 | 38.6 | 43.7 |

### EXAMPLE 3 - AQUEOUS ETHANOL EXTRACTION OF PRESS CAKE

Aqueous alcohol extraction was examined for the subsequent treatment of rapeseed press cake to obtain the food grade product. Glucosinolates are natural compounds in rapeseeds.

The rapeseed press cake contained glucosinolates 7-12 mmol/kg. The aqueous ethanol solution was therefore tested for its ability to reduce the content of glucosinolates to a suitable value, e.g. below 0.2 mmol/kg in the rapeseed ingredient.

The grinded and sieved rapeseed press cake (20 kg) was soaked wet 75 Vol-% ethanol in water (40 kg) in the MAVAZWAG Nutche filter device. Three subsequent extractions were performed with 50 kg of 75 Vol-% ethanol in water at 60 °C for 35 minutes in a continuous flat blade agitation. The extracts were removed by filtering prior adding the fresh portion of aqueous alcohol. As a final extraction step the press cake material was washed with water (60 kg) to remove the ethanol residues.

Aqueous alcohol extracts glucosinolates, sinapine, and saccharose, and may also disinfect the rapeseed press cake raw material. Moreover, it may turn proteins in the water insoluble form prior to the aqueous enzymatic treatment. Protein dispersibility index (PDI) was reduced from 12-18% to 1.5-2.5%. The PDI was measured using the AOAC standard method (AOCS. 2011e. Protein Dispersibility Index (PDI). Official Method Ba 10-65. Official Methods and Recommended Practices of the AOCS, AOCS, 6th ed., Second Printing, Urbana, IL). The glucosinolate content was reduced from 7-12 mmol/kg to 0.05 - 0.2 mmol/kg and sinapine was reduced from 1.3% to 0.09%. The relative protein content was, pronounced since saccharose was eliminated by extraction and the content of carbohydrates was reduced (Table 4).

Table 4. Composition of major components in the rapeseed press cake before and after aqueous ethanol extraction. The change-% is for content in the extracted cake minus the original press cake.

| Composition (g/100g) in DW and (mean of two batches) and change-% | | | |
|---|---|---|---|
| | press cake | extracted cake | Change-% |
| Protein | 30.4 | 35.4 | 14 |
| Lipid | 23.6 | 22.6 | -4 |
| Ash | 6.8 | 7.1 | 4 |
| Carbohydrates | 39.2 | 34.9 | -12 |

### EXAMPLE 4 - AQUEOUS ENZYMATIC TREATMENT OF PHYTATE AFTER ETHANOL EXTRACTION

Phytate is an antinutritional compound responsible for complexing metal and impacting availability of minerals. Aqueous enzymatic treatment with phytase was employed in acidified water.

The enzymatic treatment was applied to the 20 kg (DW) batch of ethanol extracted press cake. Acidified water solution (80 kg, tricalciumcitrate 0.1% in hydrochloric acid solution 0.1 M or hydrochloric acid solution 0.1 M) was added in the chamber. The optimal pH for the phytase was 4-4.5. The food grade phytase (Phytaflow or Maxamyl P) was added (5 grams; 0.025% of the weight press cake) after heating up the mixture to 50 °C. Phytate was degraded by the enzyme in a continuous flat blade agitation for three hours. Enzymatic treatment was ceased by heating up to 80 °C for 5-10 minutes. The mixture could, if desired, be neutralized at this stage with a NaOH solution until the pH 7-7.5, but in this exemplary example the neutralizing step was omitted to avoid introducing additional salt in the mixture. The excess of water was removed by vacuum filtration. The rapeseed ingredient was dried to a low moisture content (< 5%) in a MAVAZWAG device or in an oven. The content of phytate was reduced to 0.7-1.5%.

### EXAMPLE 5 - AQUEOUS ENZYMATIC TREATMENT OF CELL WALLS AFTER ETHANOL EXTRACTION

Water solubility of the protein was reduced in the ethanolic extraction. This enabled aqueous enzymatic destruction of cell walls by Viscozyme and Cellulast 1.5 enzymes (Novozymes AS). The enzymatic treatment was optimized at the laboratory scale. Acidified water (140 ml, 0.1% tricalcium citrate in 0.1 M hydrochloric acid) was added in 30 g portion of ethanol extracted and dried rapeseed press cake material. Viscozyme and Cellulast were added with Maxamyl (0.025%) in a variable portion to find optimal dose for the meanwhile destruction of cell walls in the treatment in three hours at 50 °C. This treatment increased the protein content from 36% to 39% in DW (Table 5.)

**Table 5. Increase of the protein content after the enzymatic degradation and release of cell wall materials.**

| Description of sample | Protein % DW |
|---|---|
| no enzymes | 36.3 |
| Maxamyl 0.025% | 35.7 |
| Maxamyl 0.025%, Viscozyme 1% | 36.5 |
| Maxamyl 0.025%, Viscozyme 0.5% | 37.7 |
| Maxamyl 0.025%, Viscozyme 1% and Celluclast 1% | 39 |
| Maxamyl 0.025%, Viscozyme 0.5% and Celluclast 0.5% | 37.2 |

### EXAMPLE 6 - HEAT TREATMENT TO INCREASE PROTEIN SOLUBILITY

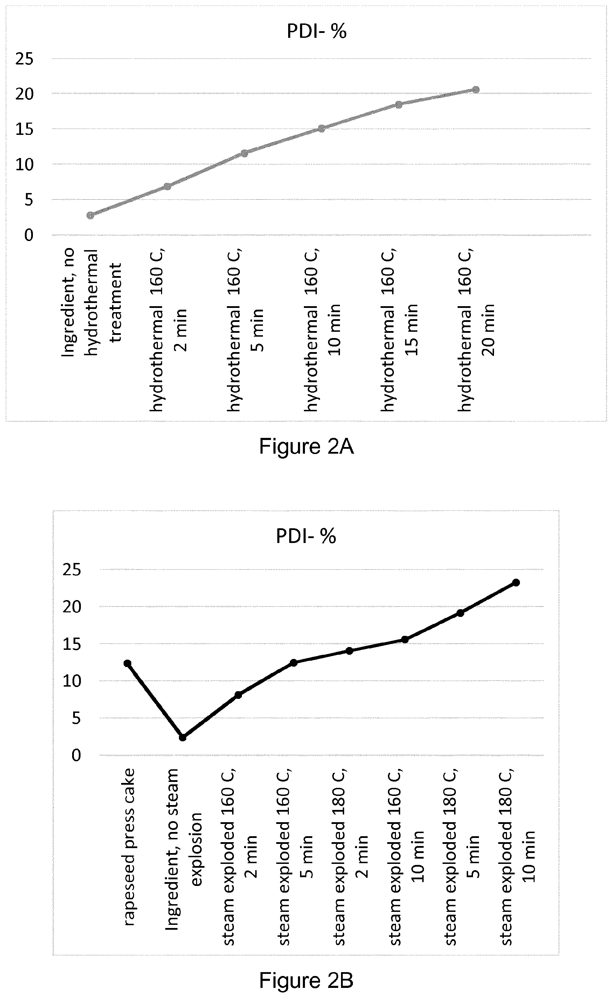

The water solubility of protein remained reduced after the aqueous enzymatic treatment. Good solubility of protein may be a benefit for functionality of protein in food formulations and enhance *in vitro* digestibility in diet. Hydrothermal treatment in an autoclave reactor and steam explosion treatment in a pressure reactor were therefore tested for their capability of improving the protein water solubility. Protein solubility, measured as PDI (%), increased proportionally while increasing the treatment time (Figures 2A and 2B). Treatments were performed in the acidified conditions at pH 4-4.5.

It is obvious to a person skilled in the art that with the advancement of technology, the basic idea may be implemented in various ways. The embodiments are thus not limited to the examples described above; instead they may vary within the scope of the claims.

The embodiments described hereinbefore may be used in any combination with each other. Several of the embodiments may be combined together to form a further embodiment. A product, a process, or a use, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1. A process for producing a plant protein ingredient from a plant material,
wherein the plant material comprises at least one of an oilseed material, such as rapeseed material, canola seed material, turnip rapeseed material, sunflower seed material, or lupine seed material; broad bean material; or pea material;
the process comprising
comminuting the plant material into particles, thereby obtaining comminuted plant material;
separating the particles of the comminuted plant material into a finer fraction and a coarser fraction;
washing the finer fraction with an aqueous alcohol solution for reducing the solubility of proteins contained in the finer fraction, thereby obtaining a washed finer fraction;
enzymatically treating the washed finer fraction to remove at least a part of the phytate and optionally cell wall components to obtain an enzymatically treated finer fraction, and optionally removing at least a part of water soluble components from the enzymatically treated finer fraction, thereby obtaining the plant protein ingredient; and
drying the plant protein ingredient to a moisture content of at most 45 % (w/w).

2. The process according to claim 1, wherein the plant protein ingredient is hydrothermally treated at a temperature of at least 130°C, thereby improving the solubility of the proteins contained therein; wherein the plant protein ingredient is optionally hydrothermally treated by at least one of dry extrusion or steam explosion treatment at a temperature of 140 - 180°C.

3. The process according to claim 1 or 2, wherein the plant material comprises or is a press cake obtainable from mechanical deoiling of an oilseed material, such as a press cake obtainable from warm pressing of an oilseed material, such as rapeseed or turnip rapeseed.

4. The process according to any one of claims 1 - 3, wherein the plant material is comminuted into the particles by at least one of grinding, milling, crushing, or cutting.

5. The process according to any one of claims 1 - 4, wherein the maximum particle diameter or the median particle diameter of the particles contained in the finer fraction is at most 0.7 mm, or at most 0.6 mm, wherein the particle diameters and their distributions are measured based on laser diffraction or using three or more cloth sieves of particular aperture sizes.

6. The process according to any one of claims 1 - 5, wherein the particles of the comminuted plant material are separated into the finer fraction and the coarser fraction by dry sieving, for example using a vibrating sieve or a cloth sieve.

7. The process according to any one of claims 1 - 6, wherein the aqueous alcohol solution comprises 55 to 85 % (w/w) of the alcohol, and wherein the alcohol comprises or is at least one of ethanol, isopropanol, isobutanol, or any mixture or combination thereof.

## Patentansprüche

1. Verfahren zur Herstellung eines pflanzlichen Eiweißstoffs aus einem Pflanzenmaterial,
wobei das Pflanzenmaterial mindestens eines von Folgendem umfasst: ein Ölsaatmaterial wie Rapssaatmaterial, Canolasaatmaterial, Rübsaatmaterial, Sonnenblumensaatmaterial oder Lupinensaatmaterial; Saubohnenmaterial; oder Erbsenmaterial;
wobei das Verfahren umfasst
Zerkleinern des Pflanzenmaterials zu Partikeln, wodurch zerkleinertes Pflanzenmaterial erhalten wird;
Trennen der Partikel des zerkleinerten Pflanzenmaterials in eine feinere Fraktion und eine gröbere Fraktion;
Waschen der feineren Fraktion mit einer wässrigen alkoholischen Lösung zur Reduzierung der Löslichkeit der in der feineren Fraktion enthaltenen Eiweiße, wodurch eine gewaschene feinere Fraktion erhalten wird;
enzymatische Behandlung der gewaschenen feineren Fraktion zur Entfernung von mindestens einem Teil des Phytats und optional von Zellwandkomponenten, um eine enzymatisch behandelte feinere Fraktion zu erhalten, und optional Entfernen von mindestens einem Teil der wasserlöslichen Komponenten aus der enzymatisch behandelten feineren Fraktion, wodurch der pflanzliche Eiweißstoff erhalten wird; und
Trocknen des pflanzlichen Eiweißstoffs auf einen Feuchtegehalt von höchstens 45 % (m/m).

2. Verfahren nach Anspruch 1, wobei der pflanzliche Eiweißstoff bei einer Temperatur von mindestens 130 °C hydrothermisch behandelt wird, wodurch die Löslichkeit der darin enthaltenen Eiweiße verbessert wird; wobei der pflanzliche Eiweißstoff optional hydrothermisch durch Trockenextrusion und/oder Dampfexplosionsbehandlung bei einer Temperatur von 140 - 180 °C behandelt wird.

3. Verfahren nach Anspruch 1 oder 2, wobei das Pflanzenmaterial einen aus der mechanischen Entölung eines Ölsaatmaterials gewinnbaren Presskuchen, wie einen Presskuchen, der aus dem Warmpressen eines Ölsaatmaterials wie Raps- oder Rübsaat gewinnbar ist, umfasst oder ein solcher ist.

4. Verfahren nach einem der Ansprüche 1 bis 3, wobei das Pflanzenmaterial durch Schleifen, Mahlen, Brechen und/oder Schneiden zu Partikeln zerkleinert wird.

5. Verfahren nach einem der Ansprüche 1 bis 4, wobei der maximale Partikeldurchmesser oder der mediane Partikeldurchmesser der in der feineren Fraktion enthaltenen Partikel höchstens 0,7 mm oder höchstens 0,6 mm beträgt, wobei die Partikeldurchmesser und ihre Verteilung mittels Laserbeugung oder mittels drei oder mehr Gewebesieben mit speziellen Lochgrößen gemessen werden.

6. Verfahren nach einem der Ansprüche 1 bis 5, wobei die Partikel des zerkleinerten Pflanzenmaterials durch Trockensiebung, zum Beispiel mit einem Rüttelsieb oder einem Gewebesieb, in die feinere Fraktion und die gröbere Fraktion getrennt werden.

7. Verfahren nach einem der Ansprüche 1 bis 6, wobei die wässrige alkoholische Lösung 55 bis 85 % (m/m) des Alkohols umfasst, und wobei der Alkohol mindestens eines der folgenden Elemente umfasst oder ist: Ethanol, Isopropanol, Isobutanol oder eine beliebige Mischung oder Kombination derselben.

## Revendications

1. Procédé pour fabriquer une substance protéique végétale à partir d'une matière végétale,
dans lequel la matière végétale comprend au moins l'un parmi une matière de graines oléagineuses, telle que matière de graines de colza, matière de graines de canola, matière de graines de navette, matière de graines de tournesol ou la matière de graines de lupin; une matière de fèves; ou une matière de petits pois;
ledit procédé comprenant les étapes consistant à
réduire la matière végétale en particules en obtenant par-là une matière végétale réduite;
séparer les particules de la matière végétale réduite en une fraction plus fine et une fraction plus grossière;
laver la fraction plus fine avec une solution alcoolique aqueuse pour réduire la solubilité des protéines contenues dans la fraction plus fine en obtenant par-là une fraction plus fine lavée;
traiter enzymatiquement la fraction plus fine lavée pour éliminer au moins une partie du phytate et optionnellement des composants de paroi cellulaire afin d'obtenir une fraction plus fine traitée enzymatiquement, et optionnellement éliminer au moins une partie des composants hydrosolubles de la fraction plus fine traitée enzymatiquement en obtenant par-là la substance protéique végétale; et
sécher la substance protéique végétale jusqu'à une teneur en humidité maximale de 45 % (p/p).

2. Procédé selon la revendication 1, dans lequel la substance protéique végétale est traitée hydrothermiquement à une température d'au moins 130 °C, ce qui améliore la solubilité des protéines y contenues; dans lequel la substance protéique végétale est optionnellement traitée hydrothermiquement par extrusion à sec et/ou par traitement par explosion de vapeur à une température de 140 à 180 °C.

3. Procédé selon la revendication 1 ou 2, dans lequel la matière végétale comprend ou est un gâteau de presse obtenable par déshuilage mécanique d'une matière de graines oléagineuses, tel qu'un gâteau de presse obtenable par pressage à chaud d'une matière de graines oléagineuses telle que de graines de colza ou de graines de navette.

4. Procédé selon l'une des revendications 1 à 3, dans lequel la matière végétale est réduite en particules par au moins l'un des procédés de meulage, broyage, concassage ou découpage.

5. Procédé selon l'une des revendications 1 à 4, dans lequel le diamètre maximal ou le diamètre médian des particules contenues dans la fraction plus fine est de 0,7 mm au maximum ou de 0,6 mm au maximum, dans lequel les diamètres des particules et leur distribution sont mesurés par diffraction laser ou à l'aide de trois ou plus de trois tamis en tissu de tailles d'ouverture particulières.

6. Procédé selon l'une des revendications 1 à 5, dans lequel les particules de la matière végétale réduite sont séparées en la fraction plus fine et la fraction plus grossière par tamisage à sec, par exemple à l'aide d'un tamis vibrant ou d'un tamis en tissu.

7. Procédé selon l'une des revendications 1 à 6, dans lequel la solution alcoolique aqueuse comprend de 55 à 85 % (p/p) d'alcool, et dans lequel l'alcool comprend ou est au moins un parmi l'éthanol, l'isopropanol, l'isobutanol ou un mélange ou une combinaison de ceux-ci.
